# EUROPÄISCHE PATENTSCHRIFT

(11) **EP 2 036 748 B1**
(45) Veröffentlichungstag und Bekanntmachung des Hinweises auf die Patenterteilung: **09.11.2011**
(21) Anmeldenummer: 08015971.8
(22) Anmeldetag: 10.09.2008
(51) Int. Cl.: B60H 1/00

(54) **Steuereinrichtung zum Steuern von Luftströmen in Kraftfahrzeugen**
Control device for controlling air flows in vehicles
Dispositif de commande pour commander des flux d'airs dans des véhicules

(30) Priorität: 17.09.2007 DE 102007044382
(43) Veröffentlichungstag der Anmeldung: 18.03.2009
(73) Patentinhaber: Behr GmbH & Co. KG, 70469 Stuttgart (DE)
(72) Erfinder: Jürgen, Otto, 75428 Illingen (DE); Dettling, Elke, 71679 Asperg (DE); Großmann, Sebastian, 71696 Möglingen (DE)
(74) Vertreter: Grauel, Andreas

(56) Entgegenhaltungen:
- DE-A1- 10 000 241
- JP-A- 7 329 540
- US-B1- 6 296 562

## Beschreibung

Die vorliegende Erfindung betrifft eine Steuereinrichtung zum Steuern von Luftströmen, wie sie insbesondere in Kraftfahrzeugen zum Einsatz kommt.

In einem Kraftfahrzeug müssen häufig Luftströme gesteuert und gelenkt werden, beispielsweise die Menge eines Luftstromes im Motorraum und/ oder die Richtung eines Luftstromes in einer Klimaanlage. Neben dem verbreiteten Einsatz von schwenkbaren Klappen zum Öffnen oder Verschließen der Querschnittsfläche von Strömungskanälen sind aus dem Stand der Technik auch Luftsteuereinrichtungen bekannt, die als Stellelemente Lamellen oder bewegte Rollbänder verwenden.

Insbesondere bei Rollband-basierten Luftsteuereinrichtungen ist es wünschenswert, dass das Rollband in allen Betriebszuständen möglichst exakt positioniert werden kann. Hierfür soll das Rollband stets gespannt sein. Das Rollband ist in beispielsweise in der Art eines Endlosbandes zusammengefügt und wird um zwei zueinander beabstandete Wellen geführt, wobei eine Welle angetrieben wird, während die andere Welle in der Regel drehbar gelagert ist und durch den Kontakt mit dem Rollband nur umläuft.

Wird eine derartige Luftsteuereinrichtung in einem Kraftfahrzeug eingesetzt, so ist diese äußeren Einflüssen, beispielsweise großen Temperaturunterschieden oder Belastungen ausgesetzt, wodurch Längenunterschiede zwischen dem Rollband und den zueinander beabstandeten Rollen entstehen, welche die Funktionssicherheit der Luftsteuereinrichtung beeinträchtigen.

Die DE 197 11 822 A1 beschreibt eine Rollbandkassette zur Steuerung von Luftströmen in Klimaanlagen von Kraftfahrzeugen nach dem Oberbegriff des Anspruchs 1, welche ein Traggestell mit einem Auflagerahmen und einen hieran montierten Druckrahmen aufweist, der auf das Rollband mit Federmitteln eine Kraft ausübt, wodurch das Rollband an den Auflagerahmen angedrückt werden soll.

Das Federmittel, welches vorzugsweise Blattfedern sein sollen, leitet seine Anpresskraft auf das Rollband an den Querenden des Druckrahmens im Bereich zwischen den Wellen ein, also in Längsrichtung des Rollbands. Aufgrund der großen Anpressfläche ist die Reibung des Rollbandes erhöht, womit sich auch der Verschleiß des Rollbandes erhöht. Die Art und der Ort der Krafteinleitung auf das Rollband führen dazu, dass das Rollband nur angedrückt wird, wodurch sich im Anpressbereich Falten bilden können. Das Rollband steht dann während seiner Bewegung nicht unter einer vorteilhaften Zugspannung, was zu einer vorzeitigen Schädigung des Rollbandes führen kann.

Die US 6 296 562 B, die als nächstliegender Stand der Technik angesehen wird, offenbart eine bekannte Steuereinrichtung mit einer Antriebsrolle, einer Umlenkrolle, einem umlaufenden Rollband, und ein elastisches Element, das die Umlenkrolle elastisch von der Antriebsrolle weg vorspannt.

Die vorliegende Erfindung stellt sich die Aufgabe, eine verbesserte Steuereinrichtung zum Steuern von Luftströmen in Kraftfahrzeugen zur Verfügung zu stellen, welche die Führung des Rollbandes verbessert und die Funktionssicherheit der Luftsteuereinrichtung erhöht.

Diese Aufgabe wird erfindungsgemäß durch eine Steuereinrichtung zum Steuern von Luftströmen in Kraftfahrzeugen gemäß Anspruch 1 gelöst.

Eine erfindungsgemäße Steuereinrichtung zum Steuern von Luftströmen in Kraftfahrzeugen weist eine Antriebsrolle; eine Umlenkrolle, ein umlaufendes Rollband, das die Antriebsrolle und die Umlenkrolle jeweils teilweise, bevorzugt um jeweils ca. 180°, umschlingt und ein elastisches Element auf, das die Umlenkrolle elastisch von der Antriebsrolle weg vorspannt.

Eine erfindungsgemäße Steuereinrichtung zum Steuern von Luftströmen erlaubt es, im Betrieb auftretende Längenänderungen des Rollbandes mit Hilfe des elastischen Elements zu kompensieren, wobei das elastische Element bevorzugt in der Lagerstelle der Umlenkrolle eingebracht ist. Eine permanente Vorspannung des Rollbandes durch das elastische Element sorgt dafür, dass die Funktionssicherheit der Steuereinrichtung erhöht wird.

Die Bauteile für derartige Luftsteuereinrichtungen können in Form einer Rollbandkassette zusammengefasst sein. Hierfür werden die Wellen und das zwischenliegende Rollband bevorzugt in einem Kassettengehäuse aufgenommen, das die Wellen und das Rollband umschließt. Die Rollbandkassette kann dann direkt nach der werksseitigen Montage im Kraftfahrzeug montiert werden. Der konstruktive Aufbau des verbesserten Längenausgleichs ist einfach und robust, so dass eine wartungsfreundliche Gestaltung der Rollbandkassette über die Lebensdauer des Kraftfahrzeugs erreicht wird. Bevorzugt ist das Rollband endlos umlaufend ausgebildet. Alternativ dazu kann es auch Enden aufweisen, wobei das eine Ende an der Umlenkrolle und das andere Ende an der Antriebsrolle fixiert ist.

Erfindungsgemäß umfasst die Umlenkrolle eine auf einer Achse drehbar gelagerte Nabe, die die Achse bevorzugt ganz oder teilweise übergreift, wobei das Rollband die Nabe teilweise umschlingt und die Achse in einer Lagerung bevorzugt verschieblich geführt ist.

Die Verschiebungsrichtung der Achse kann dabei so gewählt werden, dass diese mit der Umlaufrichtung des Rollbandes zusammenfällt, wodurch das Rollband durch die Wechselwirkung mit der Umlenkrolle stets unter einer Zugbeanspruchung steht.

Vorzugsweise verläuft die Drehachse der Umlenkrolle durch das elastische Element. Dies erlaubt eine derartige Anordnung des elastischen Elements, dass das elastische Element unmittelbar mit der Achse verbunden ist, während die Achse gleichzeitig verschieblich geführt ist. Somit kann die Funktionssicherheit der Steuereinrichtung durch die Vorspannung der Umlenkrolle mittels des elastischen Elements erhöht werden. Die Ausbildung des elastischen Elements im Bereich der Drehachse der Umlenkrolle erlaubt zudem eine platzsparende Gestaltung des Längenausgleichs für das Rollband und eine verbesserte Momentenaufnahme.

Vorzugsweise umfasst das elastische Element ein erstes Begrenzungselement, ein zweites Begrenzungselement und ein elastisches Federelement. In einer bevorzugten Ausführungsform der vorliegenden Erfindung ist das elastische Federelement ein quaderförmiges Element, das vorzugsweise ein Elastomer ist. Es sind aber auch andere Gestaltungen des elastischen Federelements entsprechend den Anforderungen des Längenausgleichs möglich.

Vorzugsweise weist das erste Befestigungselement und/ oder das zweite Befestigungselement einen Absatz auf, der die Achse formschlüssig in axialer Richtung abstützt. Da die Rollbandkassette während des Betriebs auch Stößen ausgesetzt ist, wird damit trotz der Verschiebbarkeit der Achse in Längsrichtung des Rollbandes eine sichere Führung des Rollbandes erreicht.

Vorzugsweise sind das erste Begrenzungselement und/ oder das zweite Begrenzungselement mit dem elastischen Federelement integral ausgebildet. Die Anzahl der erforderlichen Bauteile für die Ausbildung einer verschieblichen Achse zur Kompensation der Längenänderung des Rollbandes oder des Kassettengehäuses kann in der erfindungsgemäßen Ausführungsform sehr gering gehalten werden, wobei sowohl bei der Montage der Komponenten für die Achse als auch bei der Montage der Achse in die Rollbandkassette ein montagefreundlicher Aufbau erzielt wird.

Vorzugsweise ist das elastische Element form- und/ oder stoffschlüssig mit der Achse und/ oder der Lagerung verbunden. So kann das Kassettengehäuse beispielweise für eine formschlüssig Verbindung auf zwei gegenüberliegenden Seiten eine Aussparung zur Aufnahme des elastischen Elements in der Lagerung aufweisen, wodurch das elastische Element am Kassettengehäuse anliegt. Das elastische Element wiederum kann beispielsweise stoffschlüssig, besonders bevorzugt über eine Klebeverbindung, mit der Achse der Umlenkrolle verbunden sein.

In einer bevorzugten Ausführungsform der vorliegenden Erfindung greift das erste Begrenzungselement und/ oder das zweite Begrenzungselement formschlüssig in die Lagerung ein. Diese Art der Verbindung führt zu einer platzsparenden Bauweise, welche den Bauraum der Rollbandkassette nicht vergrößert, da dieses in der Achse integriert ist.

In einer bevorzugten Ausführungsform der vorliegenden Erfindung besteht das elastische Federelement aus einem Elastomer, insbesondere einem Silikonelastomer, NBR, EPDM, PU, HNBR, MVQ oder Kombinationen dieser Werkstoffe. Vorzugsweise weist das elastische Federelement dabei eine Härte Shore A im Bereich von 10 bis 90, vorzugsweise im Bereich zwischen 25 und 45 auf. Die Kombination aus der Art des eingesetzten Werkstoffs und der zugehörigen Deformierbarkeit führt bei einer geeigneten Wahl zu einer guten Dämpfung für das elastische Federelement. Gleichzeitig lässt sich während des Serienprozess über die Auswahl eines alternativen Elastomers die Deformierbarkeit des elastischen Federelements bei gleichen Abmaßen des elastischen Federelements noch verändern. Somit kann die Flexibilität bezüglich der Deformierbarkeit, und infolge dessen auch die Rückstellkraft des elastischen Federelements während des Serienprozesses erhöht werden.

In einer bevorzugten Ausführungsform besteht das erste Begrenzungselement und/ oder zweite Begrenzungselement aus POM, PP, PA, PBT, ABS oder Kombinationen dieser Werkstoffe. Diese Kunststoffe erlauben bei einem geringen Gewicht und bei geringen Kosten eine gute Deformierbarkeit des Begrenzungselements.

In einer Ausführungsform ist das Begrenzungselement unverstärkt oder mit einem Füllstoff, insbesondere mit Glasfasern, Kreide, Talkum und/ oder Glimmer, verstärkt. Die Auswahl eines verstärkten Werkstoffs lässt bei gleicher Deformierbarkeit des Begrenzungselements einen geringeren Querschnitt zu, während sich ein unverstärkter Werkstoff mit einem geringeren Kraftaufwand deformieren lässt.

In einer Ausführungsform der Achse ist das erste Begrenzungselement und/ oder das zweite Begrenzungselement bevorzugt ein im Wesentlichen plattenartiges Element. Vorzugsweise ist das plattenartige Element form- und/ oder stoffschlüssig mit dem elastischen Federelement verbunden. In einer bevorzugten Ausführungsform der Achse ist das plattenartige Element mit dem elastischen Federelement mit Hilfe einer stoffschlüssigen Verbindung, vorzugsweise durch eine Klebeverbindung, verbunden.

Bevorzugt ist bzw. sind das erste Begrenzungselement und/ oder das zweite Begrenzungselement keilförmig, wodurch die Deformierbarkeit des Begrenzungselements, die auch von der Wahl des Werkstoffs für das Begrenzungselement abhängt, unterstützt wird.

Vorzugsweise ist das elastische Element in Einbaulage vorgespannt montiert. Dadurch wird sichergestellt, dass das Rollband während des Betriebs einer permanenten Zugspannung unterworfen ist, wodurch die Funktionssicherheit der Luftsteuereinrichtung vorteilhafterweise erhöht wird.

Vorzugsweise weist die Achse im Wesentlichen die Form eines Zylinders auf. Es sind auch andere Gestaltungen des Querschnitts denkbar, beispielsweise konvexe und/ oder konkave Gestaltungen, welche Abschnitte aufweisen.

Vorteilhaft ist, dass das elastische Element in Einbaulage vorgespannt montiert ist.

Vorteilhaft ist, dass die Achse im Wesentlichen die Form eines Zylinders aufweist.

Vorteilhaft ist, dass das elastische Element form- und/ oder stoffschlüssig mit der Achse und/ oder der Lagerung verbunden ist.

Weitere Vorteile, Merkmale und Anwendungsmöglichkeiten der vorliegenden Erfindung ergeben sich aus der nachfolgenden Beschreibung in Zusammenhang mit den Figuren. Hierzu zeigt, teilweise schematisiert:
- Fig. 1: eine perspektivische Ansicht einer Steuereinrichtung zum Steuern von Luftströmen mit einem Ausschnitt im Bereich einer Umlenkrolle nach einer ersten Ausführungsform der vorliegen- den Erfindung,
- Fig. 2: eine perspektivische Ansicht einer Achse der Umlenkrolle ge- mäß Fig. 1,
- Fig. 3: eine perspektivische Ansicht einer Achse einer Steuereinrichtung nach einer zweiten Ausführungsform der vorliegenden Erfindung gemäß Fig. 1,
- Fig. 4: eine Schnittansicht der Achse gemäß Fig. 2,
- Fig. 5: eine Schnittansicht der Steuereinrichtung zum Steuern von Luft- strömen gemäß Fig. 1,
- Fig. 6: eine Schnittansicht der Achse gemäß Fig. 3,
- Fig. 7: eine Draufsicht und eine Schnittansicht entlang der Schnittlinie A-A der Steuereinrichtung zum Steuern von Luftströmen gemäß Fig. 1,
- Fig. 8: eine Ansicht von der Seite einer dritten Ausführungsform der Steuereinrichtung zum Steuern von Luftströmen,
- Fig. 9: eine perspektivische Ansicht der Steuereinrichtung zum Steuern von Luftströmen gemäß Fig. 8, und
- Fig. 10: eine perspektivische Ansicht einer vierten Ausführungsform der Steuereinrichtung zum Steuern von Luftströmen.

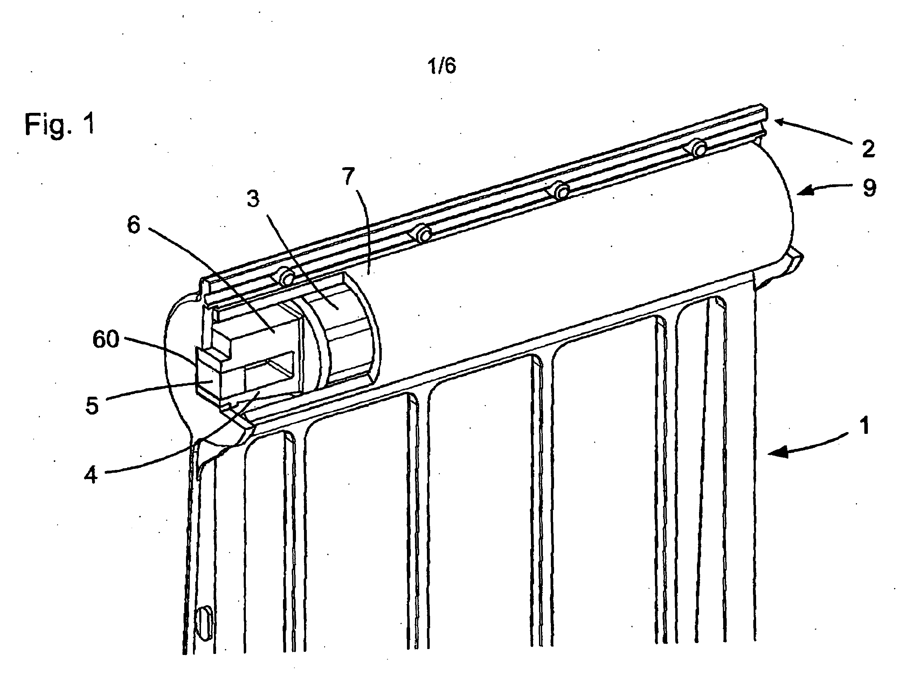

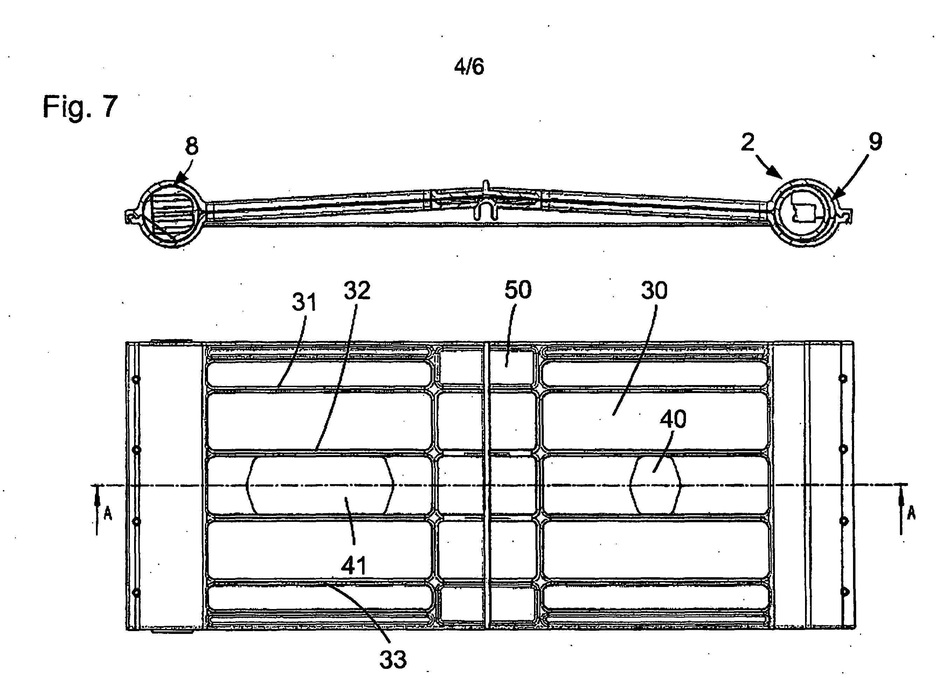

Fig. 1 zeigt eine Steuereinrichtung zum Steuern von Luftströmen 1 gemäß einer ersten Ausführungsform in Form einer Rollbandkassette mit einem Ausschnitt im Bereich der Umlenkrolle 9. Die Umlenkrolle 9 umfasst in ihrem Inneren eine Achse 3, sowie eine diese umgebende Nabe 7 und ein elastisches Federelement 5, welches mit einem ersten und zweiten Befestigungselement 4, 6 verbunden und welches ein quaderförmiges Element aus einem Elastomer ist. Das erste Befestigungselement 4 und das zweite Befestigungselement 6 sind integral mit der Achse 3 verbunden. Die Nabe 7 wird von einem Kassettengehäuse 2 aufgenommen, das jeweils an einem axialen Ende der Umlenkrolle 9 eine rechteckige Aussparung 60 aufweist. Im Bereich einer Aussparung 60 ist diese im zusammengebauten Zustand mit der Achse 3 über das elastische Federelement 5 und die beiden Befestigungselemente 4, 6 formschlüssig verbunden, die zusammen ein elastisches Element bilden, dass die Umlenkrolle 9 von einer Antriebsrolle 8 (vgl. Fig. 7) weg vorspannt.

Die Achse 3 ist durch die beiden Befestigungselemente 4, 6 verdrehfest in der Aussparung 60 in dem Kassettengehäuse 2 gelagert. Die Achse 3 ist in Einbaulage vorgespannt, d. h. mit leicht komprimiertem Federelement 5 in dem Kassettengehäuse 2 montiert.

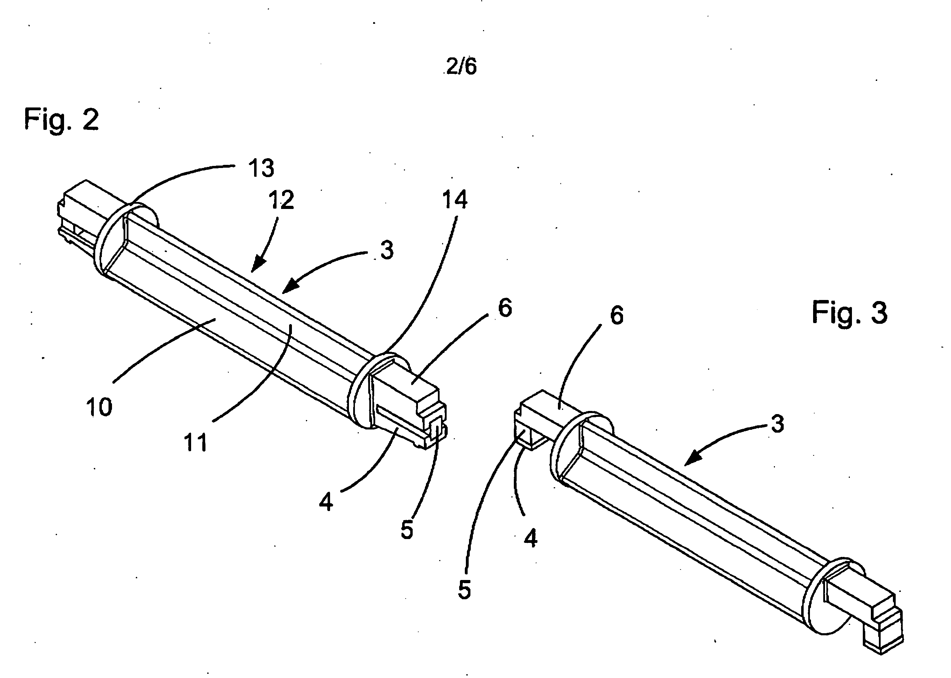

Fig. 2 zeigt eine perspektivische Ansicht der Achse 3 der Umlenkrolle 9 gemäß Fig. 1. Der Mittenbereich der Achse 3 wird durch ein im Wesentlichen zylinderförmiges Element gebildet, wobei sich drei Streben 10, 11, 12 von der Drehachse der Achse 3 aus in radialer Richtung nach außen hin erstrecken. Die drei Streben 10, 11, 12 sind um jeweils 120° in Umfangsrichtung versetzt angeordnet. An den axialen Enden der Streben 10, 11, 12 ist jeweils ein scheibenförmiges Übergangselement 13, 14 ausgebildet. Von den Übergangselementen 13, 14 aus erstreckt sich jeweils in axialer Richtung der Achse 3 das erste Begrenzungselement 4 bzw. zweite Begrenzungselement 6. Zwischen den Enden der beiden Begrenzungselemente 4, 6 ist jeweils ein elastisches Federelement 5 angeordnet. Das elastische Federelement 5 ist mit der Achse 3 integral ausgebildet, indem es über eine formschlüssige Verbindung zwischen den beiden Begrenzungselementen 4, 6 aufgenommen wird.

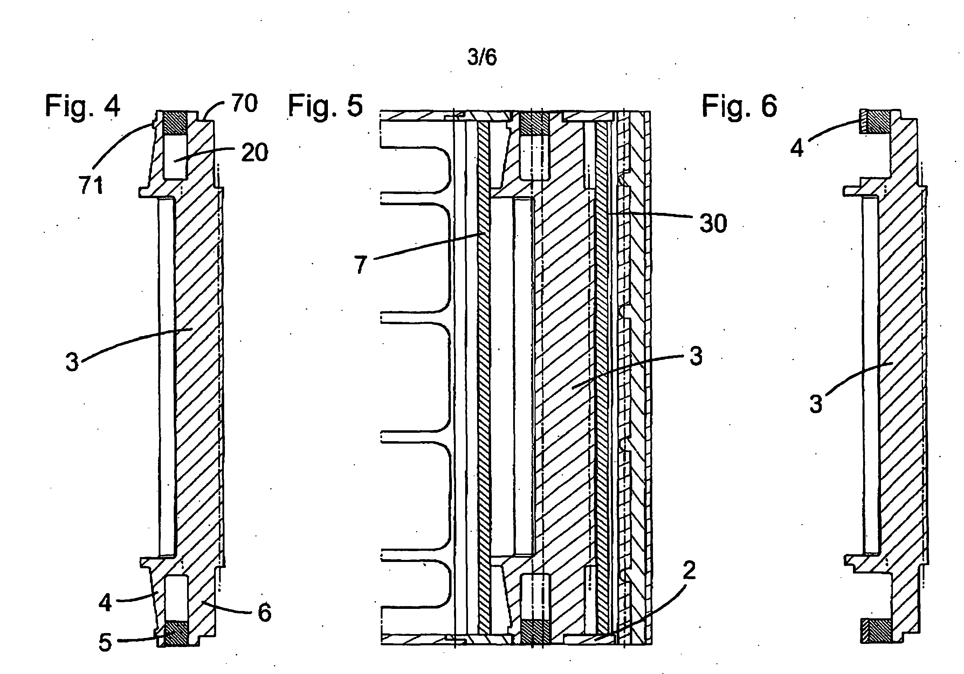

Fig. 3 zeigt eine perspektivische Ansicht einer Achse 3 einer Umlenkrolle 9 für eine Steuereinrichtung nach einer zweiten Ausführungsform der vorliegenden Erfindung. Der Aufbau der Achse 3 ist im Wesentlichen identisch mit der Achse 3 aus Fig. 2, wobei das erste Begrenzungselement 4 hier ein plattenförmiges Element ist. Das elastische Federelement 5 ist mit dem ersten und zweiten Begrenzungselement 4, 6 stoffschlüssig mittels einer Klebeverbindung verbunden. In Fig. 6 ist eine Schnittansicht der Achse 3 gemäß Fig. 3 dargestellt.

Fig. 4 zeigt eine Schnittansicht der Achse 3 gemäß Fig. 2. Die Achse 3 ist an ihren axialen Enden symmetrisch ausgebildet. Zwischen dem ersten und zweiten Begrenzungselement 4, 6 ist an dem axialen Ende der Achse 3 das elastische Federelement 5 angeordnet. In axialer Richtung der Drehachse der Achse 3 ist zwischen dem elastischen Federelement 5 und der Achse 3 eine Aussparung 20 ausgebildet. Das erste Begrenzungselement 4 ist in seinem Querschnitt keilförmig, wobei die Breite des Querschnitts zum elastischen Federelement 5 hin abnimmt. Das erste Begrenzungselement 4 weist im Bereich seines Längsendes einen Vorsprung 71 auf, welcher im Zusammenwirken mit der Aussparung 60 in dem Kassettengehäuse 2 eine axiale Verschiebung der Achse 3 verhindert. Das zweite Begrenzungselement 6 weist einen Absatz 70 auf, welcher ebenfalls von dem Kassettengehäuse 2 aufgenommen wird und eine axiale Verschiebung der Achse 3 verhindert.

In Fig. 5 ist eine Schnittansicht der Steuereinrichtung zum Steuern von Luftströmen mit der Achse 3 von Fig. 4 in eingebautem Zustand dargestellt. Die Nabe 7 wird von einem Rollband 30 um 180° umschlungen. Die Nabe 7 nimmt die Achse 3 auf, wobei die Drehachse der Nabe 7 und eine Längsachse der Achse 3 zusammenfallen. Verschiebt sich diese Längsachse der Achse 3 im Betrieb, so folgt die Drehachse der Nabe 7 durch die formschlüssige Verbindung zwischen den beiden Bauteilen der Verschiebung dieser Längsachse der Achse 3.

Fig. 7 zeigt eine Draufsicht und eine Schnittansicht entlang der Schnittlinie A-A der Steuereinrichtung zum Steuern von Luftströmen aus Fig. 1. An den Längsenden des Kassettengehäuses 2 sind jeweils die Antriebsrolle 8 bzw. die Umlenkrolle 9 in hohlzylinderförmigen Aussparungen aufgenommen. Zwischen der Umlenkrolle 9 und dem Kassettengehäuse 2 ist eine Aussparung (rechts in Fig. 7) ausgebildet, wodurch eine Verschiebung der Umlenkrolle 9 relativ zum Kassettengehäuse 2 zur Kompensation einer Längung des Rollbandes 30 oder des Kassettengehäuse 2 möglich ist.

Zur besseren Führung und Betätigung des Rollbandes 30 sind Durchtrittsöffnungen 40, 41 durch Gitterstäbe 31, 32, 33 in mehrere Fenster unterteilt. Die Gitterstäbe 31, 32, 33 erstrecken sich dabei im Wesentlichen in Längs- und Querrichtung des Rollbandes 30 auf der Oberfläche des Kassettengehäuses 2.

Bei mehreren Durchtrittsöffnungen 40, 41 umfasst das Kassettengehäuse 2 zur besseren Führung des Rollbandes 30 zwischen zwei Durchtrittsöffnungen 40, 41 mindestens eine Abstützeinrichtung 50, wobei die Abstützeinrichtung 50 hier integral mit dem Kassettengehäuse 2 ausgebildet ist. In einer anderen Ausführungsform kann diese auch lösbar mit dem Kassettengehäuse 2 verbunden sein. Die Abstützeinrichtung 50 verhindert eine Strömung zwischen den beiden aufeinanderliegenden Bandabschnitten zwischen den Durchtrittsöffnungen 40, 41.

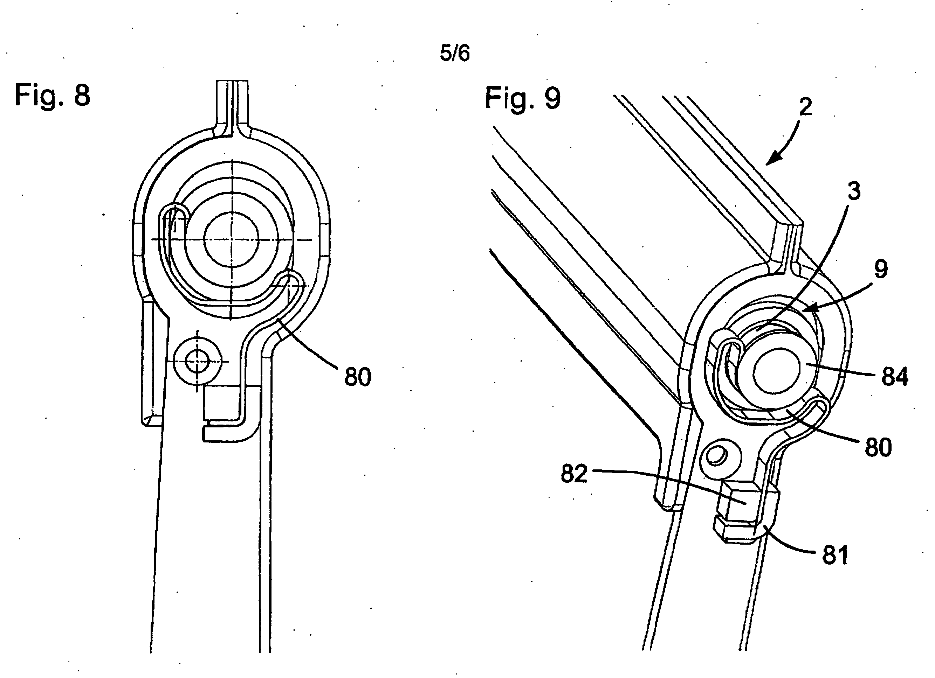

Fig. 8 und Fig. 9 zeigen eine dritte Ausführungsform einer erfindungsgemäßen Steuereinrichtung zum Steuern von Luftströmen. Die Achse 3 wird dabei von einem elastischen Element, welches hier in Gestalt einer Blattfeder 80 ausgebildet ist, mit einer Vorspannkraft beaufschlagt. Die Blattfeder 80 ist jeweils an einem axialen Ende der Achse 3 angeordnet. Die Blattfeder 80 stützt sich gegen das Kassettengehäuse 2 mit Hilfe von zwei Befestigungselementen 81, 82 ab. Die Befestigungselemente 81, 82 sind an den Außenseite des Kassettengehäuses 2 ausgebildet und erstrecken sich von diesem weg nach außen. Das Befestigungselement 82 ist rechteckförmig ausgebildet, während das Befestigungselement 81 der Gestaltung der Blattfeder 80 im Aufnahmebereich mit dem Befestigungselement 81 folgt. Die Blattfeder 80 ist mit den Befestigungselementen 81, 82 formschlüssig verbunden.

Die Blattfeder 80 wirkt mit der Achse 3 der Umlenkrolle 9 zusammen, wobei sich die Achse 3 in axialer Richtung über das Kassettengehäuse 2 hinaus erstreckt. Am Ende der Achse 3 ist ein Blattfederbegrenzungselement 84 ausgebildet, das im Wesentlichen die Gestalt einer Scheibe aufweist.

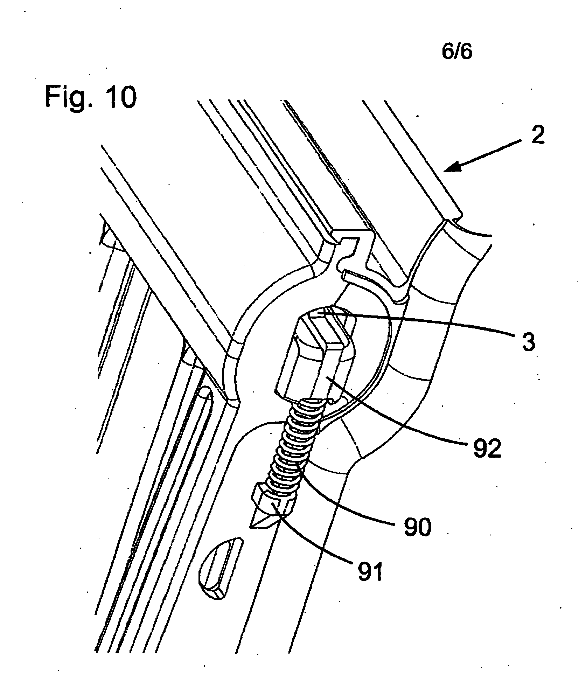

In Fig. 10 ist eine perspektivische Ansicht einer vierten Ausführungsform einer erfindungsgemäßen Steuereinrichtung zum Steuern von Luftströmen. Die Achse 3 wird mittels einer Druckfeder 90 gegenüber dem Kassettengehäuse 2 vorgespannt. Die Druckfeder 90 wirkt gegen einen Vorsprung 91, der auf der Außenseite des Kassettengehäuses 2 ausgebildet ist und sich von dem Kassettengehäuse 2 nach außen erstreckt. Der Vorsprung 91 weist einen Stift in Längsrichtung der Druckfeder 90 auf, der mit seinem äußeren Umfangsbereich die Druckfeder 90 gegen Knicken abstützt.

Die Druckfeder 90 ist mit der Achse 3 über ein Befestigungselement 92 kraftschlüssig verbunden. Das Befestigungselement 92 ist integral mit der Achse 3 ausgebildet. Das Kassettengehäuse 2 weist im Bereich des Befestigungselements 92 eine Aussparung auf, welche das Befestigungselement 92 lagert und zugleich verschieblich führt.

## Patentansprüche

1. Steuereinrichtung zum Steuern von Luftströmen in Kraftfahrzeugen, mit
- einer Antriebsrolle (8),
- einer Umlenkrolle (9),
- einem umlaufenden Rollband (30), das die Antriebsrolle (8) und die Umlenkrolle (9) umschlingt; sowie ein elastisches Element, das die Umlenkrolle (9) elastisch von der Antriebsrolle (8) weg vorspannt **dadurch gekennzeichnet, dass**
die Umlenkrolle (9) eine auf einer Achse (3) drehbar gelagerte
Nabe (7) umfasst, wobei das Rollband (30) die Nabe (7) teilweise umschlingt und die Achse (3) in einer Lagerung verschieblich geführt ist.

2. Steuereinrichtung gemäß Anspruch 1, **dadurch gekennzeichnet, dass** die Drehachse der Umlenkrolle (9) durch das elastische Element verläuft.

3. Steuereinrichtung gemäß einem der vorherigen Ansprüche, **dadurch gekennzeichnet, dass** das elastische Element ein erstes Begrenzungselement (4), ein zweites Begrenzungselement (6) und ein elastisches Federelement (5) umfasst.

4. Steuereinrichtung gemäß Anspruch 3, **dadurch gekennzeichnet, dass** das erste und/ oder das zweite Begrenzungselement form- und/ oder stoffschlossig mit dem elastischen Federelement (5) verbunden ist.

5. Steuereinrichtung gemäß Anspruch 3 oder 4, **dadurch gekennzeichnet, dass** das erste Befestigungselement (4) und/ oder das zweite Befestigungselement (6) einen Absatz (70, 71) aufweist, der die Achse (3) formschlüssig in axialer Richtung abstützt.

6. Steuereinrichtung gemäß einem der Ansprüche 3 bis 5, **dadurch gekennzeichnet, dass** das erste Begrenzungselement (4) und/ oder das zweite Begrenzungselement (6) mit dem elastischen Federelement (5) integral ausgebildet sind.

7. Steuereinrichtung gemäß einem der Ansprüche 3 bis 6, **dadurch gekennzeichnet, dass** das erste Begrenzungselement (4) und/ oder das zweite Begrenzungselement (6) elastisch ausgebildet sind bzw. ist.

8. Steuereinrichtung gemäß einem der Ansprüche 3 bis 7, **dadurch gekennzeichnet, dass** das erste Begrenzungselement (4) und/ oder das zweite Begrenzungselement (6) in eine Aussparung (60) formschlüssig eingreift.

9. Steuereinrichtung gemäß einem der Ansprüche 8 bis 8, **dadurch gekennzeichnet, dass** das elastische Federelement (5) aus einem Elastomer, insbesondere aus einem Silikonelastomer, NBR, EPDM, PU, HNBR oder MVQ besteht.

10. Steuereinrichtung gemäß einem der Ansprüche 3 bis 9, **dadurch gekennzeichnet, dass** der Werkstoff des elastischen Federelements (5) eine Härte Shore A im Bereich von 10 bis 90, vorzugsweise im Bereich zwischen 25 und 45 aufweist.

11. Steuereinrichtung gemäß einem der Ansprüche 3 bis 10, **dadurch gekennzeichnet, dass** das erste Begrenzungselement (4) und/ oder zweite Begrenzungselement (6) aus POM, PP, PA, PBT und/ oder ABS besteht.

12. Steuereinrichtung gemäß einem der Ansprüche 3 bis 11, **dadurch gekennzeichnet, dass** das erste Begrenzungselement (4) und/ oder das zweite Begrenzungselement (6) unverstärkt ist oder mit einem Füllstoff, insbesondere mit Glasfasern, Kreide, Talkum und/ oder Glimmer, verstärkt ist.

13. Steuereinrichtung gemäß einem der Ansprüche 3 bis 12, **dadurch gekennzeichnet, dass** das erste Begrenzungselement (4) und/ oder das zweite Begrenzungselement (6) ein im Wesentlichen plattenartiges Element ist.

14. Steuereinrichtung gemäß einem der Ansprüche 3 bis 12, **dadurch gekennzeichnet, dass** das erste Begrenzungselement (4) und/ oder das zweite Begrenzungselement (6) keilförmig ist.

## Claims

1. A control device for controlling air flows in motor vehicles, comprising
- a drive roller (8),
- a deflection roller (9),
- a revolving belt (30), which wraps around the drive roller (8) and the deflection roller (9), and
- an elastic element, which elastically preloads the deflection roller (9) away from the drive roller (8),
**characterized in that** the deflection roller (9) comprises a hub (7) rotatably mounted on a shaft (3), wherein the belt (30) partially wraps around the hub (7) and the shaft (3) is displaceably guided in a mounting.

2. The control device according to claim 1, **characterized in that** the rotational axis of the deflection roller (9) extends through the elastic element.

3. A control device according to any one of the preceding claims, **characterized in that** the elastic element comprises a first delimiting element (4), a second delimiting element (6) and an elastic spring element (5).

4. The control device according tao claim 3, **characterized in that** the first and/or second delimiting elements are positively connected and/or bonded to the elastic spring element (5).

5. The control device according to claim 3 or 4, **characterized in that** the first fastening element (4) and/or the second fastening element (6) comprise a shoulder (70, 71), which positively supports the shaft (3) in the axial direction.

6. A control device according to any one of claims 3 to 5, **characterized in that** the first delimiting element (4) and/or the second delimiting element (6) are integrally formed with the elastic spring element (5).

7. A control device according to any one of claims 3 to 6, **characterized in that** the first delimiting element (4) and/or the second delimiting element (6) are elastically designed.

8. A control device according to any one of claims 3 to 7, **characterized in that** the first delimiting element (4) and/or the second delimiting element (6) positively engage with a cut-out (60).

9. A control device according to any one of claims 3 to 8, **characterized in that** the elastic spring element (5) comprises an elastomer, in particular a silicon elastomer, NBR, EPDM, PU, HNBR or MVQ,

10. A control device according to any one of claims 3 to 9, **characterized in that** the Shore hardness of the material of the elastic spring element (5) ranges between 10 and 90, and preferably between 25 and 45.

11. A control device according to any one of claims 3 to 10, **characterized in that** the first delimiting element (4) and/or second delimiting element (6) comprise POM, PP, PA, PBT and/or ABS.

12. A control device according to any one of claims 3 to 11, **characterized in that** the first delimiting element (4) and/or the second delimiting element (6) are unreinforced or reinforced with a filler, in particular with glass fibers, chalk, talcum and/or mica.

13. A control device according to any one of claims 3 to 12, **characterized in that** the first delimiting element (4) and/or the second delimiting element (6) are substantially plate-shaped elements.

14. A control device according to any one of claims 3 to 12, **characterized in that** the first delimiting element (4) and/or the second delimiting element (6) are wedge-shaped,

## Revendications

1. Dispositif de commande servant à commander des flux d'air dans des véhicules automobiles, comprenant :
- un rouleau d'entraînement (8),
- un rouleau de renvoi (9),
- une bande rotative en rouleau (30) qui s'enroule autour du rouleau d'entraînement (8) et du rouleau de renvoi (9) ; ainsi qu'un élément élastique qui précontraint élastiquement le rouleau de renvoi (9), en s'éloignant du rouleau d'entraînement (8),
**caractérisé en ce que** le rouleau de renvoi (9) comprend un moyeu (7) monté en rotation sur un axe (3), où la bande en rouleau (30) s'enroule partiellement autour du moyeu (7)_{,} et l'axe (3) est guidé de façon mobile dans un logement.

2. Dispositif de commande selon la revendication 1, **caractérisé en ce que** l'axe de rotation du rouleau de renvoi (9) s'étend à travers l'élément élastique.

3. Dispositif de commande selon l'une ou l'autre des revendications précédentes, **caractérisé en ce que** l'élément élastique comprend un premier élément de limitation (4), un deuxième élément de limitation (6) et un élément élastique à ressort (5).

4. Dispositif de commande selon la revendication 3, **caractérisé en ce que** le premier et / ou le deuxième élément de limitation est assemblé avec l'élément élastique à ressort (5) par complémentarité de forme et / ou par continuité de matière.

5. Dispositif de commande selon la revendication 3 ou 4, **caractérisé en ce que** le premier élément de fixation (4) et / ou le deuxième élément de fixation (6) présente un épaulement (70, 71) qui, par complémentarité de forme, supporte l'axe (3) dans le sens axial.

6. Dispositif de commande selon l'une quelconque des revendications 3 à 5, **caractérisé en ce que** le premier élément de limitation (4) et / ou le deuxième élément de limitation (6) sont configurés en formant un ensemble intégré avec l'élément élastique à ressort (5).

7. Dispositif de commande selon l'une quelconque des revendications 3 à 6, **caractérisé en ce que** le premier élément de limitation (4) et / ou le deuxième élément de limitation (6) est ou sont configuré (s) due façon élastique.

8. Dispositif due commande selon l'une quelconque des revendications 3 à 7, **caractérisé en ce que** le premier élément de limitation (4) et / ou le deuxième élément de limitation (6) s'engage, par complémentarité de forme, dans un évidement (60).

9. Dispositif de commande selon l'une quelconque des revendications 3 à 8, **caractérisé en ce que** l'élément élastique à ressort (5) se compose d'un élastomère, en particulier d'un élastomère à base de silicone, de caoutchouc acrylonitrile butadiène (NBR), d'un monomère d'éthylène propylène diène (EPDM), de polyuréthane (PU), de caoutchouc acrylonitrile butadiène hydrogéné (HKBR) ou de silicone de méthyle vinyle (MVQ).

10. Dispositif de commande selon l'une quelconque des revendications 3 à 9, **caractérisé en ce que** le matériau de l'élément élastique à ressort (5) présente une dureté Shore A, dans la plage comprise entre 10 et 90, de préférence dans la plage comprise entre 25 et 45.

11. Dispositif de commande selon l'une quelconque des revendications 3 à 10, **caractérisé en ce que** le premier élément de limitation (4) et / ou le deuxième élément de limitation (6) se compose de polyoxyméthylène (POM), de polypropylène (PP), de polyamide (PA), de téréphtalate de polybutylène (PBT) et / ou d'acrylonitrile butadiène styrène (ABS).

12. Dispositif due commande selon l'une quelconque des revendications 3 à 11, **caractérisé en ce que** le premier élément de limitation (4) et / ou le deuxième élément de limitation (6) est non renforcé ou bien est renforcé par une matière de remplissage, en particulier des fibres de verre, de la craie, du talc et / ou du mica.

13. Dispositif de commande selon l'une quelconque des revendications 3 à 12, **caractérisé en ce que** le premier élément de limitation (4) et / ou le deuxième élément de limitation (6) est un élément sensiblement en forme de plaque.

14. Dispositif de commande selon l'une quelconque des revendications 3 à 12, **caractérisé en ce que** le premier élément de limitation (4) et / ou le deuxième élément de limitation (6) est en forme de coin.
